# EUROPEAN PATENT APPLICATION

(11) **EP 4 227 873 A1**
(43) Date of publication of application: **16.08.2023**
(21) Application number: 22197664.0
(22) Date of filing: 26.09.2022
(51) Int. Cl.: G06Q 10/10

(54) **BUSINESS CARD INFORMATION MANAGEMENT SYSTEM, METHOD, AND PROGRAM**

(30) Priority: 09.02.2022 JP 2022019003
(71) Applicant: Fujifilm Business Innovation Corp., Tokyo 107-0052 (JP)
(72) Inventor: CHIKYU, Masafumi, Yokohama, 220-8668 (JP)
(74) Representative: Meissner Bolte Partnerschaft mbB

(57) **Abstract**

A business card information management system includes: a business card information storage unit that stores business card information; a use history storage unit that stores a history of use of the business card information by a user; and a processor configured to execute a program to: register an event search condition; search the use history storage unit for business card information on a contact that matches the event search condition using the search condition; and notify a user terminal of the business card information on the contact obtained through the search as a candidate to be contacted.

## Description

### Background

### (i) Technical Field

The present disclosure relates to a business card information management system, a method, and a program.

### (ii) Related Art

Japanese Unexamined Patent Application Publication No. 2021-043929 describes an electronic business card management service system that provides a basic business card management function, a business card creation and order function, a corporate business card management function, a business card exchange function, a business card search function, a warning function, a clean service function, a death report notification and clear service function, etc. The electronic business card management service system is connectable to a plurality of terminals, which receive and transmit an electronic business card via a communication network and in which a business card application that manages electronic business cards is installed, via the business card application. The system stores electronic business card data for each user, analyzes an activity period corresponding to registration of the electronic business card for each user through exchange of the electronic business card or a business card alarm record, extracts user information having no active period during a preset period, and when the death of a user is reported, notifies registered terminals registered in the terminal of the dead user of the reported death via the business card application.

Japanese Unexamined Patent Application Publication No. 2006-268816 describes a business card information management system that improves the convenience of a user by allowing registration and update of his/her own business card information without operation or the like by the user with special attention, that certainly prevents erroneous input of the business card information, and that improves the convenience of a user or a manager by making it possible to reflect the intention of the user or the manager about notification of update of the business card information. The business card information management system includes: a business card information management server that manages business card information on a plurality of users using a business card information database that stores the business card information on the plurality of users in correlation with identification information on each user and an electronic directory database that stores an electronic directory prepared for each user in correlation with the identification information on each user; a user terminal that is used by each user; and a manager terminal that is used by a manager for the users. The manager terminal includes: a business card information registration request unit that notifies the business card information management server of business card information on the user that uses the user terminal and that provides the business card information management server with a new registration request to newly register the business card information; an identification information notification unit that notifies the user terminal of the user of the identification information on the user indicated from the business card information management server in response to the new registration request from the business card information registration request unit; and an update request unit that notifies the business card information management server of the content of update of the identification information and the business card information on the user and that provides the business card information management server with a request to update the business card information registered in the business card information management server.

Japanese Unexamined Patent Application Publication No. 2004-240676 describes a business card management system that is capable of automatically informing a person, with whom a business card was exchanged in the past, of a change in the content of the business card in an optimum manner in conjunction with update of business card data due to personnel transfer. The business card management system includes: a unit that stores a party list in which parties to which business cards are distributed are registered; a unit that acquires updated business card data when business card data including items written on the business card distributed to the parties are revised; a unit that extracts items written on the business cards to be distributed to the parties from the business card data; a unit that selects a card arrangement pattern of the business cards to be distributed to the parties; a unit that creates business card transmission data corresponding to the parties using the items written on the business cards and the card arrangement pattern; and a unit that transmits the business card transmission data to the parties.

### Summary

There have hitherto been known a technique of automatically deleting a person that has not been in contact for a particular period from a contact list after confirming that the person is registered in death report information and a technique of notifying each user that business card information has been updated when business card information on each user is updated by a manager.

However, there has not been a technique of providing a contact as a candidate to be contacted in association with an event that has taken place.

Accordingly, it is an object of the present disclosure to provide a business card management system that provides a contact to be contacted in accordance with an event.

According to a first aspect of the present disclosure, there is provided a business card information management system including: a business card information storage unit that stores business card information; a use history storage unit that stores a history of use of the business card information by a user; and a processor configured to execute a program to: register an event search condition; search the use history storage unit for business card information on a contact that matches the event search condition using the search condition; and notify a user terminal of the business card information on the contact obtained through the search as a candidate to be contacted.

According to a second aspect of the present disclosure, there is provided the business card information management system according to the first aspect, in which the event search condition that is used by the processor includes a subject condition for a search target and a time condition.

According to a third aspect of the present disclosure, there is provided the business card information management system according to the second aspect, in which the subject condition includes at least one of all contacts, a particular contact, and a particular group.

According to a fourth aspect of the present disclosure, there is provided the business card information management system according to the second aspect, in which the time condition includes at least one of being not referenced or updated for a certain period, being not in contact for a certain period, being in contact within a certain period, and being updated by a different user within a certain period.

According to a fifth aspect of the present disclosure, there is provided the business card information management system according to the first aspect, in which the processor is configured to further register at least one of a title to be used when making a notification and a message to be used when making a notification.

According to a sixth aspect of the present disclosure, there is provided the business card information management system according to any one of the first to fifth aspects, in which the processor is configured to further display the registered event search condition in a list on the user terminal.

According to a seventh aspect of the present disclosure, there is provided the business card information management system according to any one of the first to fifth aspects, in which the processor is configured to further display a notification history in a list on the user terminal.

According to an eighth aspect of the present disclosure, there is provided a method including: storing a history of use of business card information in a storage device; receiving an event search condition from a user terminal, and searching the storage device for business card information on a contact that matches the search condition; and notifying the user terminal of the business card information on the contact obtained through the search as a candidate to be contacted.

According to a ninth aspect of the present disclosure, there is provided a program causing a processor to execute a process including: storing a history of use of business card information in a storage device; receiving an event search condition from a user terminal, and searching the storage device for business card information on a contact that matches the search condition; and notifying the user terminal of the business card information on the contact obtained through the search as a candidate to be contacted.

According to the first to ninth aspects, it is possible to provide a business card management system that provides a contact to be contacted in accordance with an event.

### Brief Description of the Drawings

An exemplary embodiment of the present disclosure will be described in detail based on the following figures, wherein:
Fig. 1 illustrates the system configuration of a business card information management system according to an exemplary embodiment;
Fig. 2 is a block diagram illustrating the configuration of a business card information management server according to the exemplary embodiment;
Fig. 3 is a process flowchart (part 1) according to the exemplary embodiment;
Fig. 4 is a process flowchart (part 2) according to the exemplary embodiment;
Fig. 5 is a process flowchart (part 3) according to the exemplary embodiment;
Fig. 6 is a process flowchart (part 4) according to the exemplary embodiment;
Figs. 7A to 7C illustrate a display screen (part 1) of a user terminal according to the exemplary embodiment;
Figs. 8A and 8B illustrate a display screen (part 2) of the user terminal according to the exemplary embodiment;
Figs. 9A to 9C illustrate a display screen (part 3) of the user terminal according to the exemplary embodiment;
Figs. 10A and 10B illustrate a display screen (part 4) of the user terminal according to the exemplary embodiment;
Figs. 11A to 11C illustrate a display screen (part 5) of the user terminal according to the exemplary embodiment;
Fig. 12 illustrates a display screen (part 6) of the user terminal according to the exemplary embodiment;
Fig. 13 illustrates a display screen (part 7) of the user terminal according to the exemplary embodiment; and
Fig. 14 illustrates a display screen (part 8) of the user terminal according to the exemplary embodiment.

### Detailed Description

An exemplary embodiment of the present disclosure will be described below with reference to the drawings.

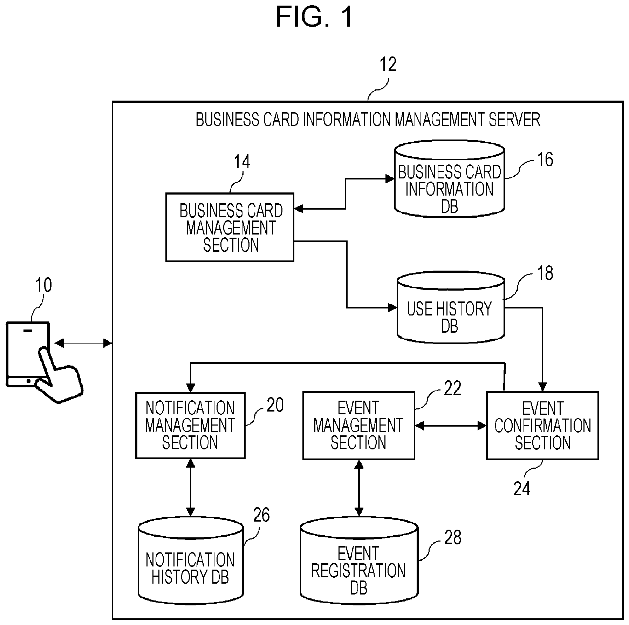

Fig. 1 illustrates the system configuration of a business card information management system according to the present exemplary embodiment. The business card information management system includes a business card information management server 12 that transmits and receives data to and from a user terminal 10. The user terminal 10 and the business card information management server 12 are connected to each other through a wired or wireless communication network. While the communication network may be a public line such as the Internet by way of example, the communication network may be a dedicated line.

The user terminal 10 is a terminal that is used by a user of the business card information management system, and may be an information terminal such as a smartphone, a tablet terminal, and a personal computer (PC). While only one user terminal 10 is illustrated in Fig. 1, a desired number of user terminals 10 may be used.

The business card information management server 12 is a cloud server disposed on the cloud to provide a business card information management service. The business card information management server 12 is constituted of one or more server computers. The business card information management server 12 executes a process of transmitting and receiving business card information to and from the user terminal 10, an event management process, and a process of transmitting and receiving notification information.

The business card information management server 12 includes, as functional blocks, a business card management section 14, a business card information database (DB) 16, a use history DB 18, a notification management section 20, an event management section 22, an event confirmation section 24, a notification history DB 26, and an event registration DB 28.

The business card management section 14 receives business card information transmitted from the user terminal 10, and stores the business card information in the business card information DB 16. In addition, the business card management section 14 acquires business card information stored in the business card information DB 16 and returns the business card information to the user terminal 10 in response to a business card information acquisition request from the user terminal 10. Further, the business card management section 14 receives information on the use of the business card information from the user terminal 10, and stores the received information in the use history DB 18. The use history of the business card information includes origination to and viewing of a contact included in the business card information and update of the business card information. The origination to a contact includes origination by mail and origination by telephone. Specifically, when the user terminal 10 originates a mail to a particular contact, information on the mail origination to the particular contact is transmitted from the user terminal 10 to the business card management section 14. The business card management section 14 receives the information, and stores the information in the use history DB 18 as a use history for the particular contact.

The business card information DB 16 stores business card information on the user. The business card information includes a personal name, a company name, a position, an address, and a contact (such as a telephone number and a mail address). In the present exemplary embodiment, the personal name, the telephone number, and the mail address of a contact are referred to as "business card information on a contact".

The use history DB 18 stores a use history of the business card information stored in the business card information DB 16. As discussed already, the use history includes a history of origination by telephone and mail and a history of update of the business card information, besides a history of viewing of the business card information. In addition, the use history stored in the use history DB 18 may also include update of the business card information by a different person (different user) that shares the business card information and update of the business card information based on personnel information from a personnel information service. Such update may not necessarily be performed by way of the business card management section 14.

The event management section 22 receives a new event registration request transmitted from the user terminal 10, and stores information on a new event in the event registration DB 28. The "event" is a phenomenon for which it is necessary to send a notification to the user terminal 10, or in other words a phenomenon about the use and the non-use of the business card information. Information on an event includes a target contact, the type in the use history, and the date and the period as conditions that are used to search for the event. The user determines the conditions by operating the user terminal 10, and transmits the conditions from the user terminal 10 to the event management section 22. In addition, the event management section 22 generates information (reservation information) for confirming an event in accordance with the event stored in the event registration DB 28, and transmits the generated information to the event confirmation section 24. The reservation information includes information on the event and the date of execution.

The event confirmation section 24 receives the reservation information from the event management section 22, and detects an event by confirming the use history of the business card information by accessing the use history DB 18 in accordance with the reservation information. When an event is detected, the event confirmation section 24 transmits notification information to the notification management section 20. The notification information includes the date of occurrence of the event, a target contact, and the notification content. The notification content includes the title of the notification and the message in the notification. The notification content may also include a flag that indicates whether the notification is read or unread.

The notification management section 20 stores the notification information in the notification history DB 26 when the notification information is received from the event confirmation section 24. In addition, the notification management section 20 notifies the user terminal 10 in accordance with the notification information.

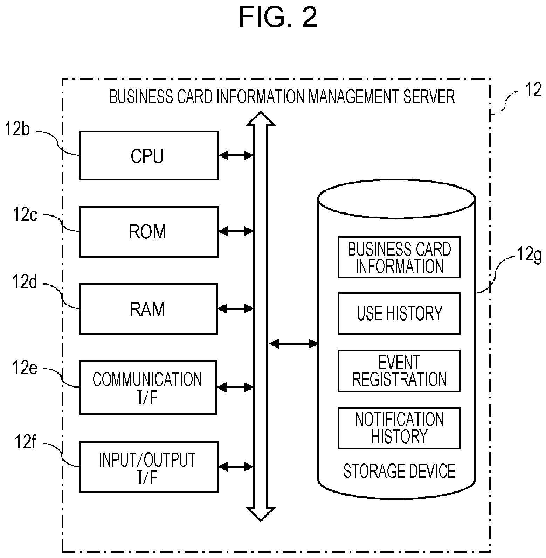

Fig. 2 is a block diagram illustrating the configuration of the business card information management server 12. The business card information management server 12 is constituted from one or more server computers, and includes one or more central processing units (CPUs) 12b, a read only memory (ROM) 12c, a random access memory (RAM) 12d, a communication interface (I/F) 12e, and an input/output I/F 12f, and a storage device 12g.

The one or more CPUs 12 implement various functions for business card information management by reading a program stored in the ROM 12c or the storage device 12g and using the RAM 12d as a working memory. The CPUs 12b implement the business card management section 14, the notification management section 20, the event management section 22, and the event confirmation section 24 in Fig. 1.

The communication I/F 12e exchanges the business card information and the notification information with the user terminal 10.

The input/output I/F 12f transmits and receives data to and from an input device such as a keyboard and a mouse and an output device such as a display device.

The storage device 12g is constituted of a non-volatile memory such as a hard disk drive (HDD) and a solid state drive (SSD). The storage device 12g stores a business card information table, a use history table, an event registration table, and a notification history table, besides storing a program. The storage device 12g implements, as a storage unit, the business card information DB 16, the use history DB 18, the notification history DB 26, and the event registration DB 28 in Fig. 1.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

In the basic process according to the present exemplary embodiment, the business card information is managed, the use history of the business card information is managed, and the use history is referenced to detect an event, and the user terminal 10 is notified using the event detection as a trigger to make effective use of the business card information.

That is, the user operates the user terminal 10 to set various events and transmit such events to the business card information management server 12. The business card information management server 12 detects whether or not the set events have occurred with reference to the use history and, when the occurrence of an event is detected, notifies the user terminal 10 of a target contact prescribed for the event.

Specifically, when an event is defined as a "customer that has not been in contact for six months until the present" and a use history that meets search conditions for such an event, that is, a use history that meets all of
"customer",
"that has not been in contact", and
"for six months until the present"
is detected, the business card information management server 12 extracts business card information on a contact related to the use history and automatically notifies the user terminal 10.

Thus, the business card information management server 12 has a function as a reminder for notifying a customer of the user that has registered the business card information of regular communications and greetings, and has a search function as a scheduler and for business card management by notifying the user of the target customer (contact). The load on the user is reduced by providing such functions to the user terminal 10.

An overview of the entire processes according to the present exemplary embodiment is as follows:
1. The user terminal 10 transmits business card information to the business card information management server 12.
2. The business card information management server 12 stores the business card information in the business card information DB 16.
3. The business card information management server 12 acquires a use history of the business card information from the user terminal 10 etc., and stores the use history in the use history DB 18.
4. The user terminal 10 transmits information on a new event to the business card information management server 12.
5. The business card information management server 12 stores the information on the new event in the event registration DB 28.
6. The business card information management server 12 searches the use history stored in the use history DB 18 using a search condition for the event stored in the event registration DB 28, and extracts business card information on a contact related to the use history that matches the search condition.
7. The business card information management server 12 notifies the user terminal 10 of the business card information on the contact obtained through the search as a candidate to be contacted.
These processes will be described in detail below.

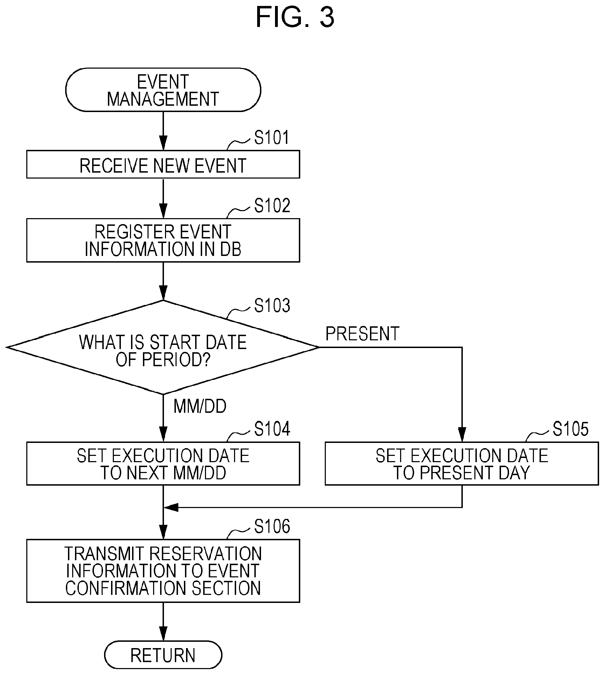

Fig. 3 is a flowchart of an event management process by the event management section 22 of the business card information management server 12.

First, the event management section 22 receives a new event registration request from the user terminal 10, and receives information on a new event (S101). Examples of the event include:
(1) sending year-end and new-year greetings to contacts that have newly registered business card information or that have used business card information in the last one year at the year end;
(2) sending a message to contacts that have newly registered business card information or that have used business card information in the last two years to indicate a change in the contact made by a different user or personnel information, express congratulations on promotion, or indicate a change in the person in charge;
(3) sending greetings or a message to catch up to contacts of valuable business partners that have not been in contact for a certain period; and
(4) deleting or updating the registered information on contacts that have not used the business card information for three years or more.

Among the above, (1) and (2) are phenomena about the use of the business card information, and (3) and (4) are phenomena about the non-use of the business card information.

Since an event is a phenomenon that triggers a notification to be sent to the user terminal 10, the title and the message required for the notification may also be included as parameters that prescribe the event.

Specifically, an event for contacts that have not used the business card information for three years may include, as parameters, the following title, period, history information, a target contact, and message:
title: "Contacts as candidates to be deleted"
period: three years back from the present
history information: no origination, reference (viewing), or update
target: all contacts
message: "Possibly unnecessary contacts have been found."
The period, the history information, and the target may be search conditions for searching for a desired use history from the use history stored in the use history DB 18.

An event for business partners that have not been in contact for a while may include the following parameters:
title: "Regular communication for customers"
period: six months back from the present
history information: no origination
target: contacts in designated group
message: "Some customers have not been in contact for a while. Get in touch to see if they need any help."

When information on a new event is received from the user terminal 10, the event management section 22 newly registers the information on the event in the event registration DB 28 (S102).

In addition, the event management section 22 determines whether the start date of the period of the new event is "present" or "particular date MM/DD" (S103). For example, if the period of the event is "six months back from the present", the start date is determined as "present". If the period of the event is "one year back from 12/29", meanwhile, the start date is determined as "12/29". If the start date of the period of the event is "particular date MM/DD", the execution date is set to the next MM/DD (S104). If the start date of the period of the event is "present", the execution date is set to the present day (S105). The event management section 22 transmits reservation information including the set execution date to the event confirmation section 24 (S106).

The event confirmation section 24 detects an event on the reserved execution date using the reservation information from the event management section 22. When an event is detected, the event confirmation section 24 transmits an indication (confirmation completion notification) to the notification management section 22. The process by the event confirmation section 24 will be further discussed later.

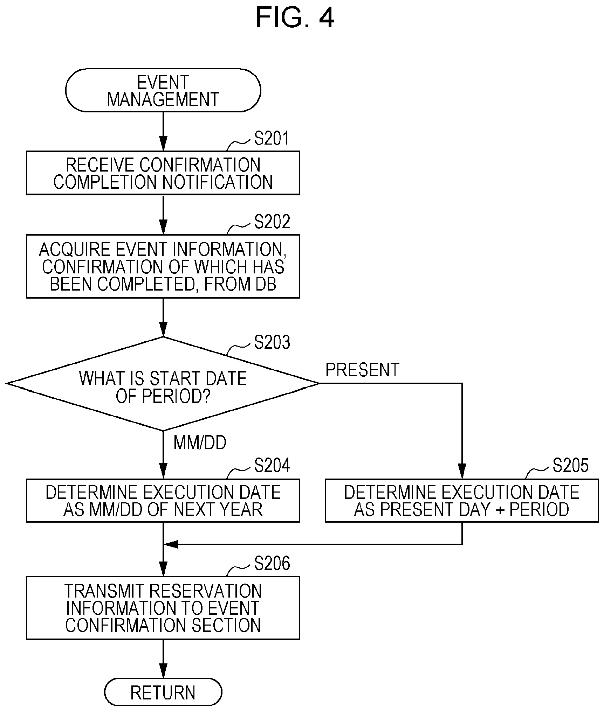

Fig. 4 is a process flowchart for a case where the confirmation completion notification from the event confirmation section 24 has been received.

When the confirmation completion notification from the event confirmation section 24 is received (S201), the event management section 22 acquires information on the event, confirmation of which has been completed, from the event registration DB 28 (S202), and determines the start date of the next execution in accordance with the start date of the period of the event. That is, if the start date of the acquired event is a particular date MM/DD, the next execution date is determined as MM/DD of the next year (S203, S204). For example, if the execution date of the period is "12/29", the next execution date is determined as 12/29 of the next year. If the start date of the acquired event is the present, the next execution date is determined as the present day plus the period (S203, S205). For example, if the period is "six months back from the present", the next execution date is determined as "six months after the present day". Then, the reservation information is transmitted again to the event confirmation section 24 (S206).

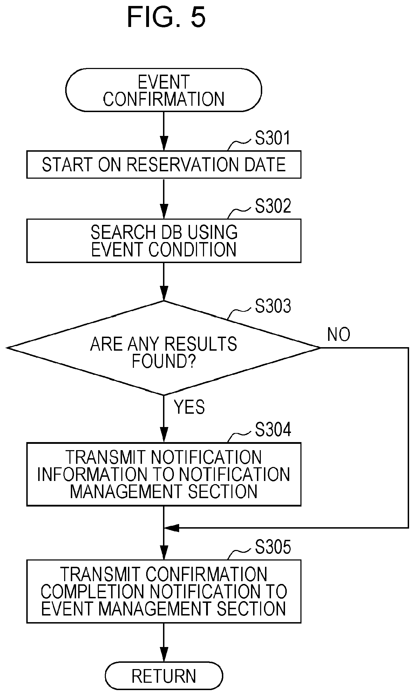

Fig. 5 is a process flowchart of event confirmation by the event confirmation section 24.

First, the event confirmation section 24 starts an event confirmation process on the reservation date included in the reservation information determined by the event management section 22 (S301). That is, the event management section 24 accesses the use history DB 18 to search for a history of use of the business card information by the user using an event condition (S302). Then, it is determined whether or not there is a use history that matches the event condition (S303).

If there is a use history that matches the event condition (YES in S303), the event confirmation section 24 transmits notification information to the notification management section 20 (S304). For example, if the event details are
title: "Regular communication for customers"
period: six months back from the present
history information: no origination
target: contacts in designated group
message: "Some customers have not been in contact for a while. Get in touch to see if they need any help"
and there is at least one contact that has not made any origination in six months back from the present when the use history DB 18 is accessed to confirm information on the history of use by the user, the determination in S303 is YES, and information on the contact that has not made any origination in six months back from the present is transmitted to the notification management section 20 as notification information. If there is no contact that has not made any origination in six months back from the present when the use history DB 18 is accessed to confirm information on the history of use by the user, on the other hand, the determination in S303 is NO, and the process in S304 is skipped.

After notification information is transmitted to the notification management section 20, the event confirmation section 24 transmits a confirmation completion notification to the event management section 22 (S305).

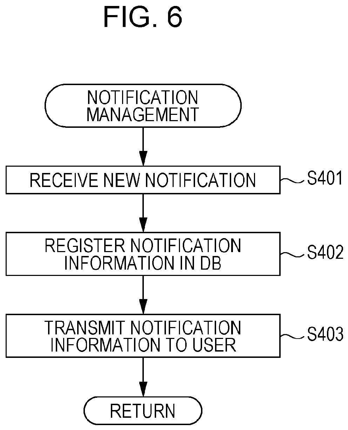

Fig. 6 is a process flowchart of notification management by the notification management section 20.

When new notification information is received from the event confirmation section 24 (S401), the notification management section 20 registers the notification information in the notification history DB 26 (S402). Then, the notification management section 20 transmits the notification information to the user terminal 10 (S403). For example, if the event details are
title: "Greetings to customers"
period: six months back from the present
history information: no origination
target: contacts in designated group
message: "Some customers have not been in contact for a while. Get in touch to see if they need any help"
and there is one contact that has not made any origination in six months back from the present, new notification information for the particular contact information is transmitted from the event confirmation section 24. Thus, when the new notification information is received, a message "Some customers have not been in contact for a while. Get in touch to see if they need any help"
is indicated to the user terminal 10.

The user terminal 10 receives the notification information transmitted from the notification management section 20, and displays the notification information on a display device. The user may take appropriate measures that match the use history, such as making regular communication, by viewing the notification and the message displayed on the display device of the user terminal 10.

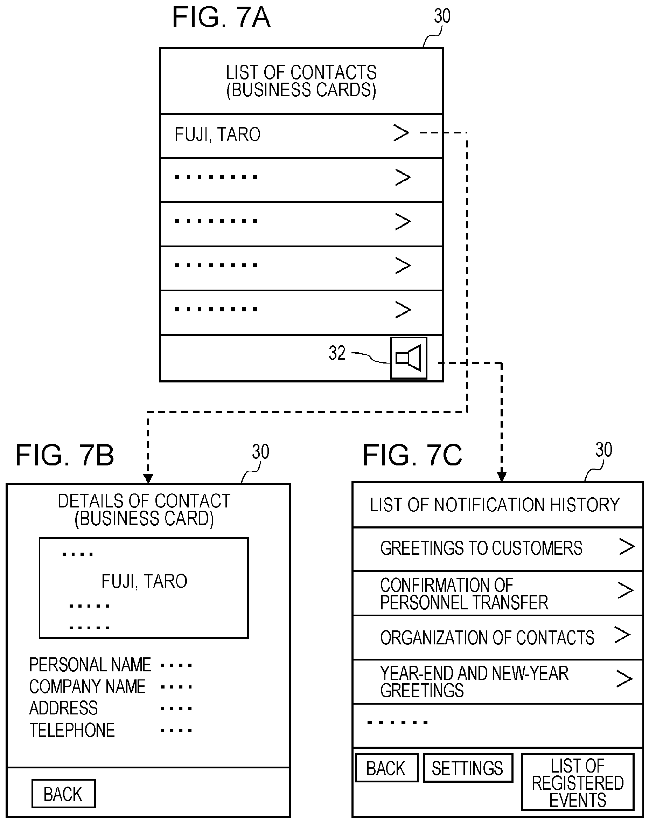

The processes according to the present exemplary embodiment will be described further specifically below using various screens to be displayed on the user terminal 10. The various screens illustrated in Figs. 7A to 14 are displayed on a display device 30 of the user terminal 10 by the processor of the user terminal 10 reading and executing an application program (app) for business card information management installed in the user terminal 10.

Fig. 7A to 7C illustrate an example of a business card information management screen to be displayed on the display device 30 of the user terminal 10. Fig. 7A illustrates a screen of a list of contacts (business cards) to be displayed when a request to acquire a list screen is transmitted from the user terminal 10 to the business card information management server 12 and the business card management section 14 of the business card information management server 12 accesses the business card information DB 16 to acquire business card information for the user and returns the business card information to the user terminal 10.

The contacts (business cards) are displayed in the form of a list. A symbol ">" is displayed on the right side of each contact as a symbolic figure (icon) that represents "Show details". An icon 32 that represents "notification" is displayed at the lower right of the screen.

Fig. 7B illustrates a screen to be displayed on the display device 30 when the user has operated the symbol ">" for a particular contact in Fig. 7A. The screen displays detailed information on the particular contact acquired from the business card information DB 16, that is, the personal name, the company name, the address, the telephone number, the electronic mail address, etc. written on the business card.

Fig. 7C illustrates a screen to be displayed on the display device 30 when the user has operated the notification icon 32 in Fig. 7A. A notification history acquired from the notification history DB 26 by the notification management section 20 in response to a notification history acquisition request from the user terminal 10 is displayed in a list. Examples of the notification history include
"Greetings to customers",
"Confirmation of personnel transfer",
"Organization of contacts", and
"Year-end and new-year greetings".

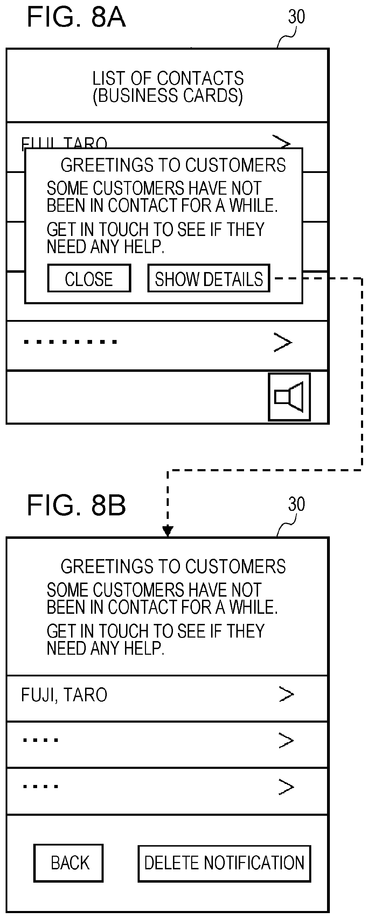

Fig. 8A and 8B illustrate a screen for notification information to be displayed on the display device 30 of the user terminal 10. Fig. 8A illustrates a screen for a case where the event confirmation section 24 confirms an event with details
title: "Greetings to customers"
period: "Six months back from the present"
history information: no origination
target: contacts in designated group
message: "Some customers have not been in contact for a while. Get in touch to see if they need any help"
and the notification management section 20 notifies the user terminal 10 in response to the event confirmation. The screen displays texts such as:
"Greetings to customers"; and
"Some customers have not been in contact for a while. Get in touch to see if they need any help"
in accordance with the message for the event. Buttons for "Close" and
"Show details"
are also displayed together with the message.

Fig. 8B illustrates a screen to be displayed on the display device 30 when the user has operated the "Show details" button in Fig. 8A. The business card information on a particular contact included in the notification information received from the notification management section 20 is displayed. Since the business card information on the contact includes a telephone number or a mail address, the user is able to make contact by tapping etc. the telephone number or the mail address. When origination is made by tapping the telephone number or the mail address, the origination operation is transmitted to the business card management section 14 and stored in the use history DB 18 to update the use history.

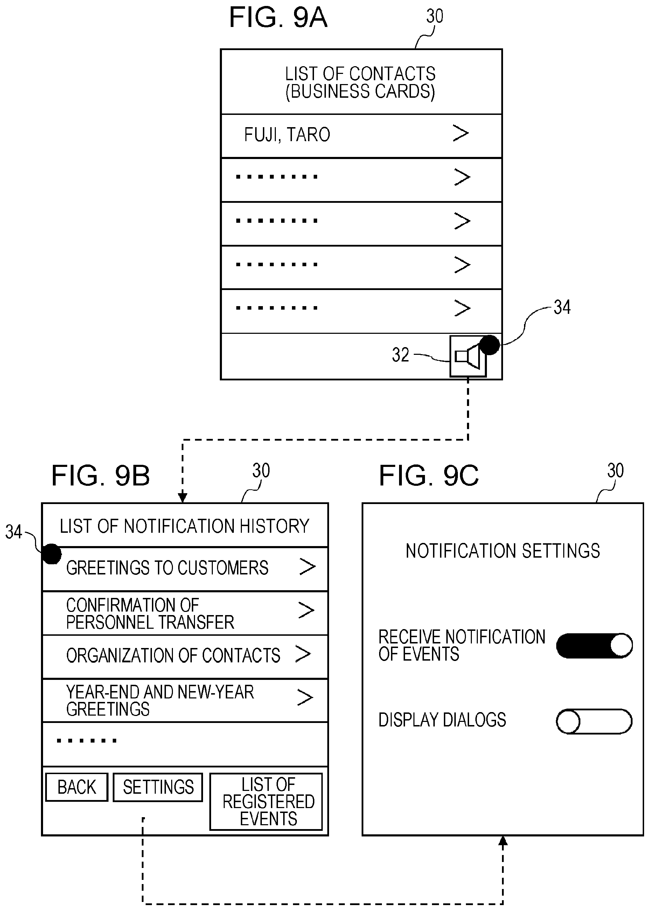

Fig. 9A to 9C illustrate a different screen for notification information to be displayed on the display device 30 of the user terminal 10. While a message is displayed on the screen in Fig. 8A, an icon (or mark) 34 that indicates the presence of a notification is displayed in Fig. 9A, in place of the message, in association with the notification icon 32. The user is able to recognize the presence of new notification information transmitted from the notification management section 20 by viewing the icon or mark 34.

Fig. 9B illustrates a screen to be displayed on the display device 30 when the user has operated the icon or mark 34 in Fig. 9A. The screen of a notification history illustrated in Fig. 7C is displayed, and an icon or mark 34 that indicates an unread status is displayed with a notification corresponding to new notification information in the notification history. The mark 34 functions as an identification flag for read and unread statuses. Buttons for
"Back",
"Settings", and
"Registered event list"
are displayed at the lower portion of the screen. The "Settings" button is used to make settings of a notification method. The user is able to easily grasp what notifications are made and which notifications are unread by viewing the screen in Fig. 9B.

Fig. 9C illustrates a screen to be displayed on the display device 30 when the user has operated the "Settings" button in Fig. 9B. The screen is displayed to allow selecting whether to receive notifications of events and whether to display dialogs. When the user selects to receive notifications of events, the user is notified of new notification information received from the notification management section 20 by displaying the icon 34 as illustrated in Fig. 9A. When the user selects to display dialogs, on the other hand, the user is notified of new notification information received from the notification management section 20 by displaying a message as illustrated in Fig. 8A.

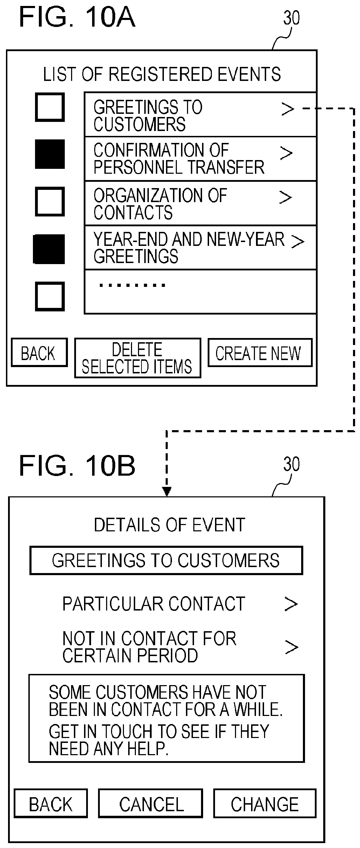

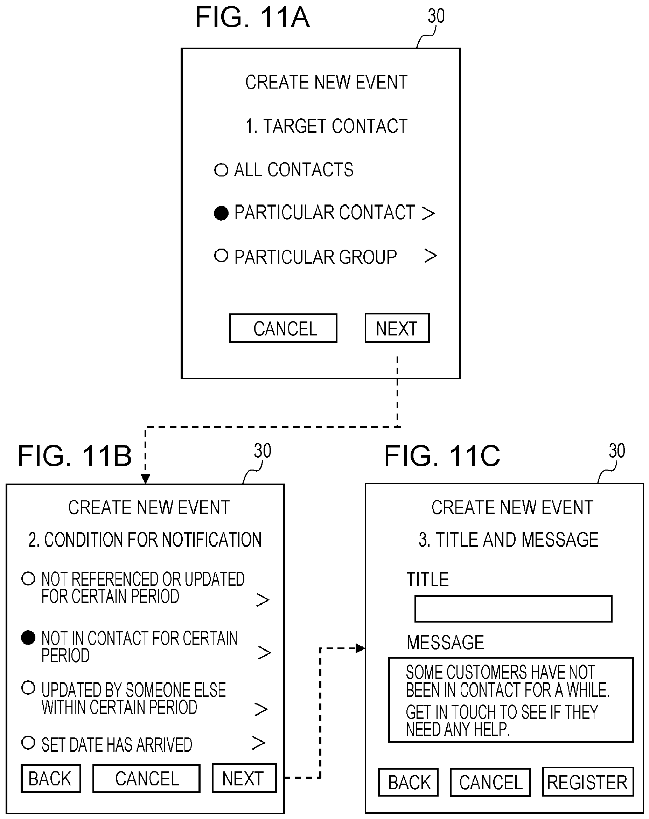

Fig. 10A and 10B illustrate an event management screen to be displayed on the display device 30 of the user terminal 10. Fig. 10A illustrates a screen of a list of registered events acquired by the event management section 22 accessing the event registration DB 28 in response to an acquisition request from the user terminal 10. The registered events are displayed in the form of a list, and a check box is displayed on the left side of each of the registered events. The user selects desired registered events by ticking the corresponding check boxes. Buttons for
"Back",
"Delete selected items", and
"Create new"
are displayed at the lower portion of the screen. The user is able to delete the registered events selected using the check boxes by operating the "Delete selected items" button. That is, the user is able to update the registered events at any time by deleting unnecessary events. A transition is made to the screen in Fig. 11A, to be discussed later, when the user operates the "Create new" button.

Fig. 10B illustrates a screen for a case where the user has operated the "Show details" icon ">" for one of the registered events in Fig. 10A, illustrating the details of the registered event. Since an event includes a title, a period, history information, a target, and a message as parameters as discussed already, such parameters are displayed as the details.

Fig. 11A to 11C illustrate a new event registration screen to be displayed on the display device 30 of the user terminal 10. Fig. 11A illustrates an initial screen, which allows selecting a target contact as a subject condition. A menu including
"All contacts",
"Particular contact", and
"Particular group"
is displayed, by way of example.

Fig. 11B illustrates a screen for a case where a target contact is specified and the user has operated the "Next" button in Fig. 11A. The screen allows selecting the period (or date) of an event as a time condition and the type of the use history. A menu including
"Not referenced or updated for certain period",
"Not in contact for certain period",
"Updated by someone else within certain period", and
"Set date has arrived"
is displayed, by way of example. The target contact set in Fig. 11A and the period (or date) and the type of the use history set in Fig. 11B all function as conditions for searching for an event.

Fig. 11C illustrates a screen for a case where the period and the type of the use history are specified and the user has operated the "Next" button in Fig. 11B. The screen allows selecting a title and a message. Input fields for the title and the message are displayed, by way of example. The user inputs a desired title and a message to the input fields. When a title and a message are input and the "Register" button is operated in Fig. 11C, new event information is transmitted from the user terminal 10 to the event management section 22.

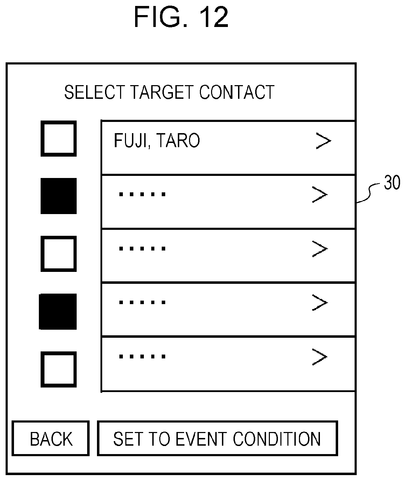

Fig. 12 illustrates a screen for a case where the user has operated the "Show details" icon ">" for "Particular contact" in Fig. 11A. The screen is displayed to allow making further detailed settings for a particular contact. In the drawing, a particular contact is selected by ticking a check box in the list of contacts.

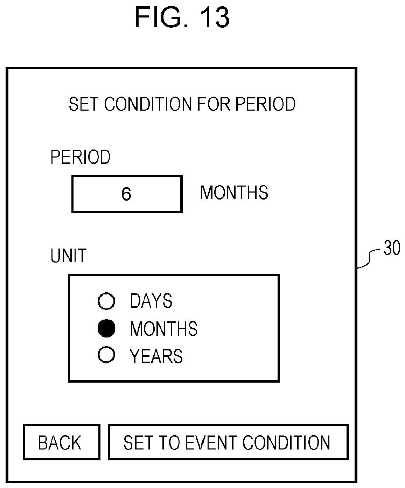

Fig. 13 illustrates a screen for a case where the user has operated the "Show details" icon ">" for "Not in contact for certain period" in Fig. 11B. The screen is displayed to allow making further detailed settings for a condition for the period. In the drawing, settings are made for a condition for the period by selecting a period and a unit.

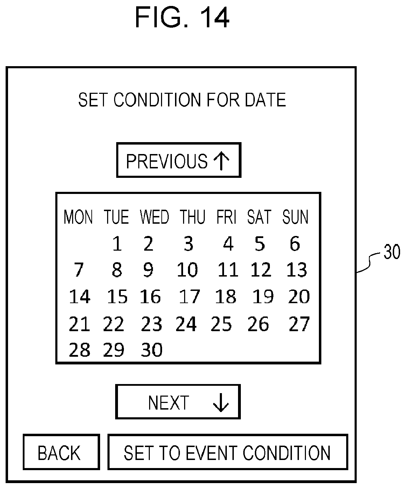

Fig. 14 illustrates a screen for a case where the user has operated the "Show details" icon ">" for "Set date has arrived" in Fig. 11B. The screen is displayed to allow making further detailed settings for a set date. In the drawing, a monthly calendar is displayed, and a date is set by selecting a desired date.

In the present exemplary embodiment, as described above, an event is determined as a phenomenon about the use and the non-use of business card information, an event search condition is used to search the use history DB 18 for business card information on a contact that matches the search condition, and the user terminal 10 is automatically notified of the business card information on the contact obtained through the search as a candidate to be contacted. Thus, it is possible to prevent the user from failing to make contact with and send greetings to customers by making effective use of the business card information.

In the present exemplary embodiment, in addition, the user terminal 10 displays registered events in a list. Thus, it is easy to delete unnecessary notifications and add desired events, improving the convenience for the user.

In the present exemplary embodiment, further, the user terminal 10 displays a notification history in a list, and a flag that indicates whether or not a notification has been read is set. This prevents the user from failing to make contact with customers.

While an exemplary embodiment of the present disclosure has been described above, the present disclosure is not limited thereto, and may be modified in various ways.

For example, while an event is constituted to include a target contact, the type of a use history to be referenced, a date, a title, and a message, origination in the use history may include origination by mail, origination by telephone, origination due to a notification, voluntary origination not due to a notification, etc. When telephone origination or mail origination is made using business card information on a contact included in a notification, the origination is stored in the use history DB 18 as origination due to a notification. Several typical patterns of events may be prepared in combination with corresponding search sentences, and a target contact and a period (or date) may be parameters of the search sentences.

Information on the terminal at the notification destination may be included in the notification information. Specifically, when a smartphone and a PC are used by the user as the user terminal 10, a notification may be sent to only the smartphone, to both the smartphone and the PC, etc.

Further, the notification management section 20 may transmit a mail directly to a target contact on the basis of notification information, rather than transmitting the notification information to the user terminal 10, when the user desires so. In this case, the notification management section 20 transmits, to the user terminal 10, a confirmation notification indicating that a mail has been transmitted directly to a target contact.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. A business card information management system comprising:
a business card information storage unit that stores business card information;
a use history storage unit that stores a history of use of the business card information by a user; and
a processor configured to execute a program to:
register an event search condition;
search the use history storage unit for business card information on a contact that matches the event search condition using the search condition; and
notify a user terminal of the business card information on the contact obtained through the search as a candidate to be contacted.

2. The business card information management system according to claim 1,
wherein the event search condition that is used by the processor includes a subject condition for a search target and a time condition.

3. The business card information management system according to claim 2,
wherein the subject condition includes at least one of all contacts, a particular contact, and a particular group.

4. The business card information management system according to claim 2,
wherein the time condition includes at least one of being not referenced or updated for a certain period, being not in contact for a certain period, being in contact within a certain period, and being updated by a different user within a certain period.

5. The business card information management system according to claim 1,
wherein the processor is configured to further register at least one of a title to be used when making a notification and a message to be used when making a notification.

6. The business card information management system according to any one of claims 1 to 5,
wherein the processor is configured to further display the registered event search condition in a list on the user terminal.

7. The business card information management system according to any one of claims 1 to 5,
wherein the processor is configured to further display a notification history in a list on the user terminal.

8. A method comprising:
storing a history of use of business card information in a storage device;
receiving an event search condition from a user terminal, and searching the storage device for business card information on a contact that matches the search condition; and
notifying the user terminal of the business card information on the contact obtained through the search as a candidate to be contacted.

9. A program causing a processor to execute a process comprising:
storing a history of use of business card information in a storage device;
receiving an event search condition from a user terminal, and searching the storage device for business card information on a contact that matches the search condition; and
notifying the user terminal of the business card information on the contact obtained through the search as a candidate to be contacted.
